# EUROPÄISCHE PATENTSCHRIFT

(11) **EP 3 807 555 B1**
(45) Veröffentlichungstag und Bekanntmachung des Hinweises auf die Patenterteilung: **08.06.2022**
(21) Anmeldenummer: 19729062.0
(22) Anmeldetag: 12.06.2019
(51) Int. Cl.: F16F 15/124, F16F 15/12

(54) **TORSIONSDÄMPFER FÜR EIN FAHRZEUG**
TORSION DAMPER FOR A VEHICLE
AMORTISSEUR DE TORSION POUR UN VÉHICULE

(30) Priorität: 12.06.2018 EP 18177406
(43) Veröffentlichungstag der Anmeldung: 21.04.2021
(73) Patentinhaber: BASF Polyurethanes GmbH, 49448 Lemförde (DE)
(72) Erfinder: PRICKER, Sebastian, 49448 Lemfoerde (DE)
(86) Internationale Anmeldenummer: PCT/EP2019/065361
(87) Internationale Veröffentlichungsnummer: WO 2019/238763

(56) Entgegenhaltungen:
- EP-A2- 2 757 038
- WO-A1-2011/042486
- DE-A1-102012 005 836
- DE-U1- 29 720 240
- FR-A1- 2 701 518

## Beschreibung

Die vorliegende Erfindung betrifft einen Torsionsdämpfer für ein Fahrzeug, insbesondere einen Lenkungsdämpfer oder einen Dämpfer für einen Antriebsstrang des Fahrzeugs, der zur Drehmomentübertragung zwischen einer ersten Fahrzeugkomponente und einer zweiten Fahrzeugkomponente eingerichtet ist, und wobei der Torsionsdämpfer ein elastisch verformbares Dämpferelement aufweist, welches dazu eingerichtet ist, in installiertem Zustand des Torsionsdämpfers zwischen der ersten und zweiten Fahrzeugkomponente zu sitzen und die erste Fahrzeugkomponente mit der zweiten Fahrzeugkomponente drehmomentübertragend zu koppeln.

Die Erfindung betrifft ferner einen Antriebsstrang eines Fahrzeugs sowie einen Lenkantriebsstrang eines Fahrzeugs.

Torsionsdämpfer der eingangs bezeichneten Art sind allgemein bekannt. Sie werden insbesondere dazu eingesetzt, in dem jeweiligen Antriebsstrang beziehungsweise Lenkantriebsstrang die Ausbreitung von Vibrationen, Stößen und sonstigen Kraftspitzen abzumildern, die von einem Antriebsaggregat selbst, beziehungsweise einem Lenkimpuls, oder von außen in das System eingetragen werden. Die Vibrationen oder Kräfte wirken auf die Antriebsstränge beziehungsweise Lenkantriebsstränge in axialer Richtung, radialer Richtung und/oder in Umfangsrichtung und können Unregelmäßigkeiten im Drehmomentverlauf zur Folge haben. Um die Zuverlässigkeit der vorstehend genannten Systeme zu verbessern, und um die Langlebigkeit eines Antriebsstrangs beziehungsweise Lenkantriebsstrangs des Fahrzeugs im Allgemeinen zu verbessern, werden Torsionsdämpfer benutzt. Ein zentrales Merkmal dieser Torsionsdämpfer ist das elastisch verformbare Dämpferelement, welches einerseits eine Drehmomentübertragung zwischen den Fahrzeugkomponenten gewährleistet, andererseits aber aufgrund seines elastischen Formänderungsvermögens auftretende Lastspitzen zumindest partiell abfedern oder dämpfen kann.

Besonderes Augenmerk kommt bei der Entwicklung von Torsionsdämpfern ihrer Verschleißanfälligkeit zu. Es hat sich herausgestellt, dass die Dämpferelemente bekannter Torsionsdämpfer eine begrenzte Lebensdauer aufweisen, so dass trotz im Allgemeinen zufriedenstellender Funktionsweise hier Verbesserungsbedarf gesehen wird. Zudem wird angestrebt, die Torsionsdämpfer möglich kostengünstig produzieren zu können und mit geringem Aufwand an den Fahrzeugkomponenten installieren zu können. Auch hinsichtlich dieser ökonomischen Aspekte werden die bestehenden Torsionsdämpfer, die bisweilen aus recht vielen Einzelteilen bestehen und bisweilen in verschiedenen Arbeitsschritten mit den Fahrzeugkomponenten verbunden werden müssen, als verbesserungswürdig angesehen. Auch die Sicherstellung der geforderten Qualität kann, insbesondere bei Gelenkscheiben, mit zusätzlichem Aufwand verbunden sein.

Das Dokument FR 2 701 518 A1 beschreibt einen Torsionsdämpfer entsprechend dem Oberbegriff des Anspruchs 1.

Der Erfindung lag demzufolge die Aufgabe zugrunde, einen Torsionsdämpfer der eingangs bezeichneten Art dahingehend zu verbessern, dass er die vorstehend beschriebenen Nachteile möglichst weitgehend überwindet. Insbesondere lag der Erfindung die Aufgabe zugrunde, einen Torsionsdämpfer anzugeben, welcher eine zuverlässige Wirkweise zeugt, und gleichzeitig kostengünstig herzustellen ist. Ferner lag der Erfindung insbesondere die Aufgabe zugrunde, einen solchen Torsionsdämpfer anzugeben, der mit geringem Aufwand installiert werden kann.

Die Erfindung löst die ihr zugrunde liegende Aufgabe bei einem Torsionsdämpfer der eingangs bezeichneten Art, indem der Torsionsdämpfer eine Sicherungshülse aufweist, die dazu eingerichtet ist, an der ersten Fahrzeugkomponente axial und rotatorisch fixiert zu werden, und im installierten Zustand von der zweiten Fahrzeugkomponente beabstandet angeordnet zu sein, und eine Anzahl radialer Durchgangsöffnungen, die derart dimensioniert sind, dass das Dämpferelement im installierten Zustand die Durchgangsöffnungen durchdringt.

Es soll hierbei verstanden werden, dass die Fahrzeugkomponenten Teil des Fahrzeugs, insbesondere des Antriebsstrangs sind, und der Torsionsdämpfer erfindungsgemäß eine separate Bauteilanordnung, die im installierten Zustand mit den beiden Fahrzeugkomponenten zusammenwirkt.

Die Erfindung macht sich die Erkenntnis zunutze, dass der Torsionsdämpfer durch das Vorsehen seiner Sicherungshülse deutlich geringere Relativbewegungen zu den beiden Fahrzeugkomponenten ausüben kann, als es im Stand der Technik noch der Fall ist. Hierdurch wird der Torsionsdämpfer weniger verschleißanfällig. Der Erfindung liegt ferner die Erkenntnis zugrunde, dass die Sicherungshülse dem Torsionsdämpfer eine gewisse strukturelle Festigkeit verleiht, indem sich das Material des Dämpferelements durch die radialen Durchgangsöffnungen der Sicherungshülse hindurcherstreckt. Das Dämpferelement wird durch dieses Eingreifen in die Durchgangsöffnungen der Sicherungshülse mit der Sicherungshülse verzahnt und ebenfalls axial sowie rotatorisch relativ zu der ersten Fahrzeugkomponente fixiert. Dadurch, dass aber die Sicherungshülse im installierten Zustand nur mit der ersten Fahrzeugkomponente, nicht aber auch mit der zweiten Fahrzeugkomponente in Verbindung steht, wird sichergestellt, dass eine Kraft- und Drehmomentübertragung von der ersten zur zweiten Fahrzeugkomponente immer über das Dämpferelement geleitet wird. Es ist hierbei anzunehmen, und auch hinnehmbar, dass ein Teil der Kräfte und Momente, die von der zweiten Fahrzeugkomponente aus in das Dämpferelement eingeleitet werden, partiell auch über die Sicherungshülse in die erste Fahrzeugkomponente abgeleitet werden. Durch die Beabstandung der Sicherungshülse von der zweiten Fahrzeugkomponente wird aber gewährleistet, dass keine ungedämpfte Kraft- oder Drehmomentübertragung am Dämpferelement vorbei (direkt zwischen den beiden Fahrzeugkomponenten) erfolgen kann. Durch die Kombination der Sicherungshülse und des Dämpferelements wird es möglich, das Dämpferelement extern in einem ersten Schritt mit der Sicherungshülse zu verbinden, und dann die Baugruppe bestehend aus der Sicherungshülse und dem Dämpferelement in einem einzigen Arbeitsschritt mit der ersten Fahrzeugkomponente zu verbinden. Die Sicherungshülse gewährleistet hierbei auch die positionsgetreue Ausrichtung und Platzierung des elastisch verformbaren Dämpferelements, welches ohne eine solche Sicherungshülse nur unter großem Aufwand in unmittelbaren Kontakt mit beiden Fahrzeugkomponenten zu bringen wäre.

Die Erfindung wird vorteilhaft weitergebildet, indem die Sicherungshülse teilweise oder vollständig aus einer Hartkomponente ausgebildet ist, und das Dämpferelement teilweise oder vollständig aus einer Weichkomponente hergestellt ist. Hierunter ist erfindungsgemäß zu verstehen, dass die Hartkomponente eine höhere Steifigkeit aufweist als die Weichkomponente.

Durch die Härteabstufung wird sichergestellt, dass die Dämpferaufgabe ausschließlich von dem Dämpferelement übernommen wird, während die Sicherungshülse die positionsgetreue Anordnung des Dämpferelements innerhalb des Torsionsdämpfers sicherstellt.

Die Sicherungshülse und das Dämpferelement können in bevorzugten Ausführungsformen wahlweise als separate Teile hergestellt werden und dann, vorzugsweise formschlüssig, miteinander verbunden werden, oder aber einstückig miteinander verbunden werden, beispielsweise indem das Dämpferelement und die Sicherungshülse in einem Mehrkomponentenverfahren miteinander zusammengefügt werden.

In einer bevorzugten Ausführungsform ist das Dämpferelement derart dimensioniert, dass das Dämpferelement im installierten Zustand mittels formschlüssigen Anliegens an den Durchgangsöffnungen axial und/oder rotatorisch an der Sicherungshülle fixiert ist. Je kleiner das Bewegungsspiel zwischen dem Dämpferelement und der Sicherungshülse ist, desto genauer ist letztlich die Position des Dämpferelements im Torsionsdämpfer, und desto geringer ist der zu erwartende Verschleiß, der sich ansonsten infolge von Spiel einstellen würde. Sofern Bewegungsspiel zwischen dem Dämpferelement und der Sicherungshülse vorhanden ist, so ist es bevorzugt, wenn das Bewegungsspiel in Umfangsrichtung, also in Rotationsrichtung des Torsionsdämpfers, geringer ist als das Bewegungsspiel in axialer Richtung. In radialer Richtung wird im installierten Zustand in der Regel nicht mit Bewegungsspiel zu rechnen sein.

In einer weiteren bevorzugten Ausführungsform ist das Dämpferelement aus einem volumenkompressiblen Material hergestellt, und derart dimensioniert, dass es im installierten Zustand mittels der beiden Fahrzeugkomponenten zumindest partiell komprimiert ist. Über den Grad der Kompression kann auch relativ präzise das Ansprechverhalten des Dämpferelements bestimmt werden, analog zu der Vorspannung einer Feder in einem Federdämpfersystem.

In einer weiteren bevorzugten Ausführungsform ist das elastisch verformbare Material ein volumenkompressibles Material.

Besonders bevorzugt ist das volumenkompressible Material (auch: volumenkompressibler Werkstoff) als Elastomer auf der Basis von zelligen, insbesondere mikrozelligen, Polyisocyanat-Polyadditionsprodukten, insbesondere auf der Basis von mikrozelligen Polyurethanelastomeren und/oder thermoplastischem Polyurethan, vorzugsweise enthaltend Polyharnstoffstrukturen ausgebildet.

Volumenkompressible Materialien wie die vorgenannten haben den besonderen Vorteil, dass sie im Vergleich zu anderen Materialien wie beispielsweise Gummi ein extrem hohes elastisches Formänderungsvermögen bei gleichzeitig hoher Standfestigkeit aufweisen.

Die Polyisocyanat-Polyadditionsprodukte sind bevorzugt auf der Basis von mikrozelligen Polyurethanelastomeren, auf der Basis von thermoplastischem Polyurethan oder aus Kombinationen aus diesen beiden Materialien aufgebaut, die ggf. Polyharnstoffstrukturen enthalten können.

Besonders bevorzugt sind mikrozellige Polyurethanelastomere, die in einer bevorzugten Ausführungsform eine Dichte nach DIN 53420 von 200 kg/m3 bis 1100 kg/m3, bevorzugt 300 kg/m3 bis 800 kg/m3, eine Zugfestigkeit nach DIN 53571 von 2 N/mm2, bevorzugt 2 N/mm2 bis 8 N/mm2, eine Dehnung nach DIN 53571 von 300 %, bevorzugt 300 % bis 700 % und eine Weiterreißfestigkeit nach DIN 53515 von bevorzugt 8 N/mm bis 25 N/mm haben.

Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm.

Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukten werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Konturelemente werden in einer Ausführungsform mittels einer Schäumform erzeugt. In einer weiteren Ausführungsform werden sie nachträglich in den konzentrischen Grundkörper eingearbeitet. Es sind auch aus Halbzeugen gefertigte Teile denkbar. Die Fertigung kann z.B. über Wasserstrahlschneiden erfolgen.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40°C bis 95°C, bevorzugt 50°C bis 90°C. Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dicht schließendes Formwerkzeug gebracht werden. Die Formteile sind nach 5 Minuten bis 60 Minuten ausgehärtet und damit entformbar. Die Menge des in das Formwerkzeug eingebrachten Reaktionsgemisches wird üblicherweise so bemessen, dass die erhaltenen Formkörper die bereits dargestellte Dichte aufweisen. Die Ausgangskomponenten werden üblicherweise mit einer Temperatur von 15°C bis 120°C, vorzugsweise von 30°C bis 110°C, in das Formwerkzeug eingebracht. Die Verdichtungsgrade zur Herstellung der Formkörper liegen zwischen 1,1 und 8, vorzugsweise zwischen 2 und 6. Die zelligen Polyisocyanat-Polyadditionsprodukte werden zweckmäßigerweise nach dem "one shot"-Verfahren mit Hilfe der Hochdrucktechnik, der Niederdruck-Technik oder insbesondere der Reaktionsspritzguss-Technik (RIM) in offenen oder vorzugsweise geschlossenen Formwerkzeugen, hergestellt. Alternativ wird ein Pre-Polymer-Prozess zur Herstellung der zelligen Polyisocyanat-Polyadditionsprodukte angewandt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

In den vorstehend beschriebenen Ausführungsformen ist der Torsionsdämpfer mit der Sicherungshülse als einzelnem Sicherungselement beschrieben worden. In einer bevorzugten Weiterbildung der Erfindung ist die Sicherungshülse allerdings lediglich ein erstes Sicherungselement, und der Torsionsdämpfer weist zusätzlich ein zweites Sicherungselement auf, das dazu eingerichtet ist, an der zweiten Fahrzeugkomponente axial und rotatorisch fixiert zu werden, und im installierten Zustand von der ersten Komponente beabstandet angeordnet zu sein. Vorzugsweise ist das zweite Sicherungselement als Sicherungsring ausgebildet und axial angrenzend an dem Dämpferelement angeordnet. Besonders bevorzugt ist das Sicherungselement in seiner Querschnittsform der korrespondierenden Anlagefläche der zweiten Fahrzeugkomponente angepasst. Das zweite Sicherungselement ist insbesondere dazu ausgebildet, eine axiale Relativbewegung zwischen der zweiten Fahrzeugkomponente und dem Dämpferelement zu begrenzen und stützt sich vorzugsweise zu diesem Zweck in axialer Richtung an dem Dämpferelement ab. Das zweite Sicherungselement ist, vorzugsweise formschlüssig, mit der zweiten Fahrzeugkomponente verbindbar.

In Zusammenschau stellt sich die Baugruppe dann so dar, dass das erste Sicherungselement vorzugsweise an einem ersten stirnseitigen Ende des Torsionsdämpfers mit der ersten Fahrzeugkomponente kraft- oder formschlüssig verbindbar ist, und das zweite Sicherungselement an einem gegenüberliegenden zweiten stirnseitigen Ende des Torsionsdämpfers mit der zweiten Fahrzeugkomponente kraft- oder formschlüssig verbindbar ist.

In einer weiteren bevorzugten Ausführungsform sind das erste und zweite Sicherungselement in einem vormontierten Zustand des Torsionsdämpfers mittels eines oder mehrerer Verbindungsstege verbunden, wobei die Verbindungsstege jeweils eine Solltrennstelle zur Trennung der Sicherungselemente voneinander aufweisen. Das erste und zweite Sicherungselement können in dieser Ausführungsform besonders bevorzugt einteilig hergestellt werden, beispielsweise in einem Spritzgussverfahren. Die Anbringung einer Solltrennstelle an den Verbindungsstegen ermöglicht es, das erste und zweite Sicherungselement nach der Installation des Torsionsdämpfers an einer der beiden Fahrzeugkomponenten, insbesondere an der ersten Fahrzeugkomponente, aufzutrennen, um so die im Betrieb ungewollte Direktverbindung zwischen den beiden Sicherungselementen zu verhindern. Durch die Verbindung der beiden Sicherungselemente im vormontierten Zustand wird indessen die Montagefreundlichkeit noch weiter erhöht. Zudem ist der Torsionsdämpfer gemäß dieser Ausführungsform äußerst kosteneffizient herstellbar.

In einer weiteren bevorzugten Ausführungsform weist das Dämpferelement quer zu seiner Längsachse einen im Wesentlichen sternförmigen Querschnitt auf, der eine mit jeweils an den Fahrzeugkomponenten ausgebildeten Kupplungsprofilen korrespondierende Anzahl von Vertiefungen im Vorsprung in radialer Richtung aufweist, welche dazu eingerichtet sind, im installierten Zustand des Torsionsdämpfers zwischen den Kupplungsprofilen der ersten und zweiten Fahrzeugkomponente zu sitzen.

Vorzugsweise ist das Dämpferelement dazu eingerichtet, zwischen einem männlichen und einem weiblichen Kupplungselement angeordnet zu werden.

Die Sicherungshülse und das Dämpferelement sind vorzugsweise dazu eingerichtet, entsprechende Negativformen an einer umfänglichen Innenseite und Außenseite aufzuweisen, die jeweils mit der korrespondierenden Anlagefläche des Kupplungsprofils der ersten Fahrzeugkomponente und der zweiten Fahrzeugkomponente übereinstimmen, um einen Formschluss zu gewährleisten.

In einer weiteren bevorzugten Ausführungsform ist die Sicherungshülse eine Außenhülse, die das Dämpferelement im Wesentlichen umschließt, und zur Installation an einer Fahrzeugkomponente mit weiblichem Kupplungsprofil eingerichtet ist. Unter "im Wesentlichen umschließend" wird vorliegend verstanden, dass das Dämpferelement jedenfalls größtenteils radial innerhalb der Sicherungshülse angeordnet ist, und sich lediglich an den Durchgangsöffnungen durch die Sicherungshülsen hindurch nach außen erstreckt.

In Ausführungsformen, in denen die Sicherungshülse eine Innenhülse ist, würde es sich genau andersherum verhalten. Hier wäre das Dämpferelement im Wesentlichen außen um die Sicherungshülse herum angeordnet, und würde sich bei den Durchgangsöffnungen nach innen durch die Öffnungen hindurch erstrecken, um so den Kontakt zwischen erster und zweiter Fahrzeugkomponente dämpfend zu gestalten. Auch eine Variante der Sicherungshülse als Innenhülse ist vom Erfindungsgedanken mit umschlossen.

Die Erfindung ist vorstehend unter Bezugnahme auf einen Torsionsdämpfer gemäß einem ersten Aspekt der Erfindung beschrieben worden. In einem weiteren Aspekt betrifft die Erfindung ferner einen Antriebsstrang eines Fahrzeugs der eingangs bezeichneten Art. Die Erfindung löst bei einem solchen Antriebsstrang die ihr zugrundeliegende Aufgabe, indem der Torsionsdämpfer ein elastisch verformbares Dämpferelement aufweist, welches zwischen der ersten und zweiten Fahrzeugkomponente sitzt und eine Sicherungshülse aufweist, die an der ersten Fahrzeugkomponente axial und rotatorisch fixiert, und von der zweiten Fahrzeugkomponente beabstandet angeordnet ist, und eine Anzahl radialer Durchgangsöffnungen aufweist, welche das Dämpferelement durchdringt. Der Antriebsstrang gemäß der Erfindung macht sich die gleichen Vorteile und bevorzugten Ausführungsformen zunutze wie der erfindungsgemäße Torsionsdämpfer, weswegen zur Vermeidung von Wiederholungen diesbezüglich auf die obigen Ausführungen verwiesen wird. Die bevorzugten Ausführungsformen des Torsionsdämpfers sind zugleich die bevorzugten Ausführungsformen des Antriebsstrangs.

In einem weiteren Aspekt betrifft die Erfindung einen Lenkantriebsstrang der eingangs bezeichneten Art.

Die Erfindung löst die ihr zugrundeliegende Aufgabe bei einem solchen Lenkantriebsstrang, indem der Torsionsdämpfer wiederum ein elastisch verformbares Dämpferelement aufweist, welches zwischen der ersten und der zweiten Fahrzeugkomponente sitzt, und eine Sicherungshülse, die an der ersten Fahrzeugkomponente axial und rotatorisch fixiert und von der zweiten Fahrzeugkomponente beabstandet angeordnet ist, und eine Anzahl radialer Durchgangsöffnungen aufweist, welche das Dämpferelement durchdringt. Auch der erfindungsgemäße Lenkantriebsstrang macht sich die gleichen Vorteile und bevorzugten Ausführungsformen zunutze wie der Torsionsdämpfer gemäß dem ersten Aspekt und der Antriebsstrang gemäß dem zweiten Aspekt, weswegen wiederum zur Vermeidung von Wiederholungen auf die obigen Ausführungen verwiesen wird. Die bevorzugten Ausführungen des Torsionsdämpfers sind zugleich die bevorzugten Ausführungsformen des erfindungsgemäßen Lenkantriebsstrangs.

Die Erfindung wird nachfolgend unter Bezugnahme auf die beigefügten Figuren anhand eines bevorzugten Ausführungsbeispiels näher beschrieben. Hierbei zeigen:
- Fig. 1:: eine schematische räumliche Explosionsdarstellung eines Torsionsdämpfers zum Zusammenbauen mit zwei Fahrzeugkomponenten gemäß einem bevorzugten Ausführungsbeispiel,
- Fig. 2a,b:: unterschiedliche räumliche Darstellungen des Torsionsdämpfers aus Figur 1,
- Fig. 3:: eine Explosionsdarstellung des Torsionsdämpfers gemäß den Figuren 1 und 2a,b, und
- Fig. 4:: eine Schnittdarstellung des Torsionsdämpfers gemäß den Figuren 1 bis 3.

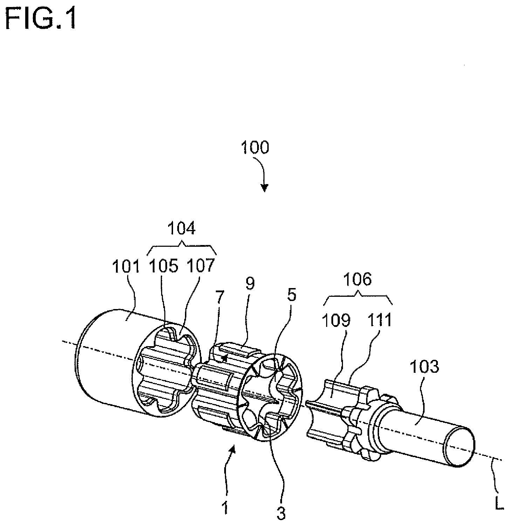

In Figur 1 ist ein System 100 dargestellt, welches wahlweise ein Antriebsstrang oder ein Lenkantriebsstrang sein könnte. Das System 100 weist eine erste Fahrzeugkomponente 101 auf, sowie eine zweite Fahrzeugkomponente 103, die drehmomentübertragend miteinander verbunden werden sollen. Die erste Fahrzeugkomponente weist zu diesem Zweck ein Kupplungsprofil 104 auf, welches sich aus einer Anzahl alternierend angeordneter Ausnehmungen 105 und Vorsprünge 107 zusammensetzt. Das Kupplungsprofil 104 ist ein weibliches Kupplungsprofil. Die zweite Fahrzeugkomponente weist ein männliches Kupplungsprofil 106 auf, welches sich aus einer alternierenden Anordnung von Ausnehmungen 109 und Vorsprüngen 111 zusammensetzt.

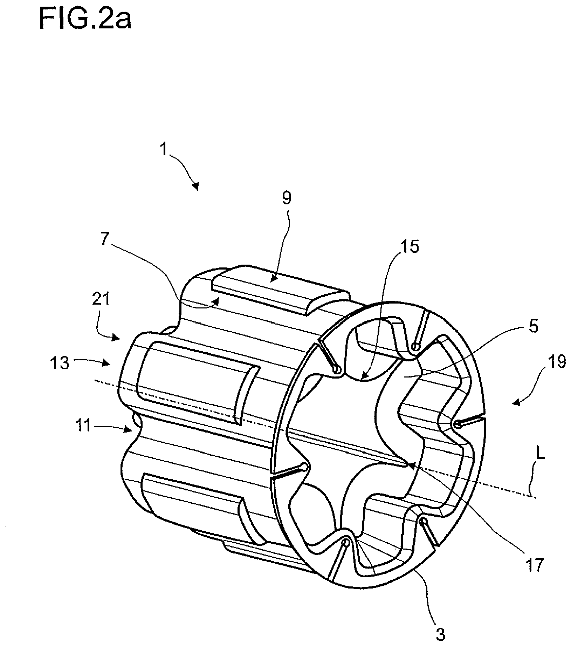

Die Drehmomentübertragung zwischen der ersten Fahrzeugkomponente 101 und der zweiten Fahrzeugkomponente 103 wird über einen Torsionsdämpfer 1 gewährleistet. Der Torsionsdämpfer 1 stellt eine eigene Bauteilanordnung dar, die mit den beiden Fahrzeugkomponenten 101, 103 im installierten Zustand zusammenwirkt. Die erste Fahrzeugkomponente 101 wird mit dem Torsionsdämpfer 1 mittels Aufstecken verbunden (siehe auch Figuren 2a ff. weiter unten). Die zweite Fahrzeugkomponente 103 wird ebenfalls mittels Aufstecken auf ihr Kupplungsprofil 106 mit dem Torsionsdämpfer 1 verbunden. Der Torsionsdämpfer 1 weist ein Dämpfungselement 5 auf, welches im Wesentlichen von einer Sicherungshülse 3 umschlossen wird. Die Sicherungshülse 3 weist als erstes Sicherungselement eine Anzahl von Durchgangsöffnungen 7 auf, durch die hindurch sich das Dämpferelement 5 mit einer Anzahl von Vorsprüngen 9 radial nach außen hin erstreckt. Auf diese Weise kann das Dämpferelement 5 gleichzeitig von der Sicherungshülse 3 stabil gehalten werden, und einen durchgehenden Dämpfungskontakt zwischen der ersten Fahrzeugkomponente 101 und der zweiten Fahrzeugkomponente 103 herstellen. Der Torsionsdämpfer 1, die erste Fahrzeugkomponente 101 und die zweite Fahrzeugkomponente 103 sind vorzugsweise koaxial zueinander entlang einer Längsachse L ausgerichtet. Die Längsachse L ist zugleich die Längsachse des Torsionsdämpfers 1.

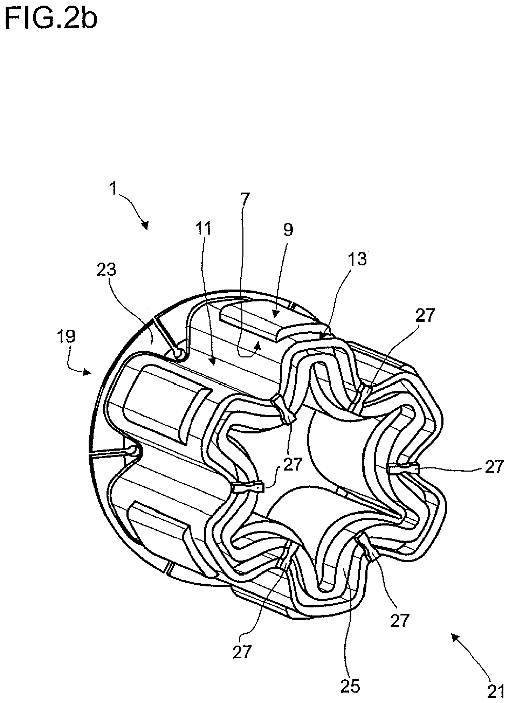

In den Figuren 2a,b ist der Torsionsdämpfer 1 näher dargestellt. Der Torsionsdämpfer 1 weist an einer äußeren Umfangsfläche eine Anzahl von Vertiefungen 11 und Vorsprüngen 13, die ihrer Form und Anordnung nach dem Kupplungsprofil 104 der ersten Fahrzeugkomponente entsprechen und formschlüssig mit dem Kupplungsprofil 104 in Eingriff gebracht werden können. Die Vorsprünge 9 werden im installierten Zustand ggf. leicht komprimiert. Die Sicherungshülse 3 verhindert eine unzulässig große Scherungsbeanspruchung des Dämpferelements 5 und ermöglicht eine präzise Positionierung des Torsionsdämpfers 1 in der ersten Fahrzeugkomponente 101. Auf einer inneren Umfangsfläche des Torsionsdämpfers 1 ist eine Anzahl von radial nach innen vorstehenden Vorsprüngen 15 und eine alternierend angeordnete Anzahl von Vertiefungen 17 ausgebildet, die in Form und Abstand korrespondierend zu dem männlichen Kupplungsprofil 106 der zweiten Fahrzeugkomponente 103 ausgebildet sind. Die zweite Fahrzeugkomponente 103 kann mit ihrem Kupplungsprofil 106 in den Torsionsdämpfer 1 eingesteckt werden. Im vorliegenden Ausführungsbeispiel ist vor allem ein fester Außensitz angestrebt worden, weswegen die Sicherungshülse 3 als Außenhülse ausgebildet ist. Sofern eine feste Anbindung an die zweite Fahrzeugkomponente 103 angestrebt wird, wäre es erfindungsgemäß aber genauso möglich, das Sicherungselement 3 als Innenhülse auszubilden und an der zweiten Fahrzeugkomponente 103 zu fixieren.

Der Torsionsdämpfer 1 weist ein erstes stirnseitiges Ende 19 und ein gegenüberliegend angeordnetes zweites stirnseitiges Ende 21 auf. Die Sicherungshülse 3 ist dazu eingerichtet, an dem ersten stirnseitigen Ende 19 über einen flanschartigen Vorsprung 23 mit der ersten Fahrzeugkomponente 101 verbunden zu werden, beispielsweise indem eine vorstehende Bördelkante (nicht dargestellt) an der ersten Fahrzeugkomponente 101 nach Installation der Sicherungshülse 3 nach Innen umgebogen wird. An dem zweiten stirnseitigen Ende ist 21 als zweites Sicherungselement ein Sicherungsring 25 angeordnet, der zur Fixierung an der zweiten Fahrzeugkomponente 103 ausgebildet ist, beispielsweise mittels Klemmens.

In den Figuren 2a,b ist der Torsionsdämpfer 1 in vormontiertem, noch nicht installierten Zustand abgebildet. In diesem Zustand sind der Sicherungsring 25 und die Sicherungshülse 3 mittels einer Anzahl von Verbindungsstegen 27 miteinander verbunden. Vorzugsweise sind die Sicherungshülse 3 als erstes Sicherungselement und der Sicherungsring 25 als zweites Sicherungselement als ein Teil im Spritzgussverfahren oder vergleichbaren Verfahren hergestellt worden.

Das Dämpferelement 5 ist bereits in der Sicherungshülse 3 installiert und erstreckt sich mit seinen Vorsprüngen 9 durch die entsprechenden Durchgangsöffnungen 7 hindurch radial nach außen.

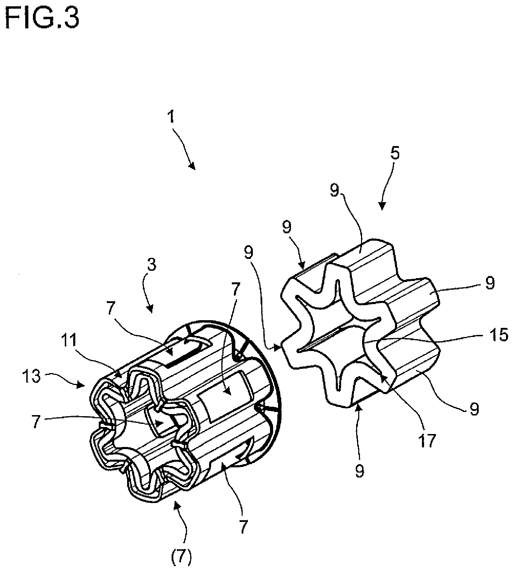

In Figur 3 ist zusätzlich zu den Darstellungen gemäß Figuren 2a,b eine Explosionsdarstellung des Torsionsdämpfers 1 abgebildet. Der Blick auf die Durchgangsöffnungen 7 ist nun frei. Ebenso ist aus Figur 3 zu erkennen, dass das Dämpferelement 5 einen im Wesentlichen sternförmigen Querschnitt aufweist, der an das Kupplungsprofil 106 angepasst ist, während die Sicherungshülse 3 ein (ebenfalls im Wesentlichen sternförmiges) Querschnittsprofil aufweist, das an die Kontur des Kupplungsprofils 104 der ersten Fahrzeugkomponente 101 angepasst ist.

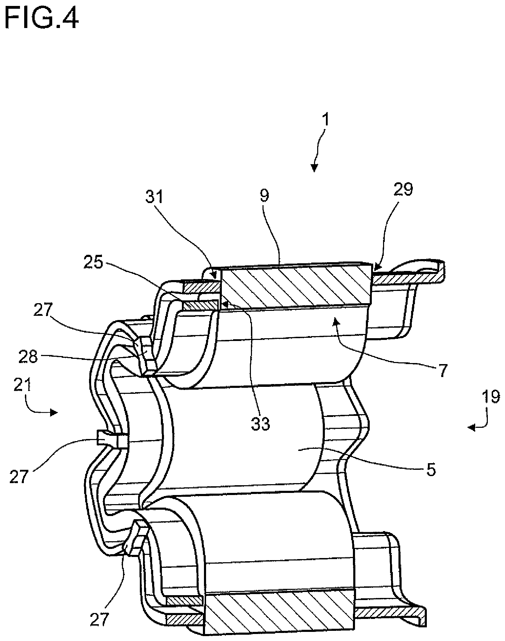

In Figur 4 ist schließlich abrundend noch eine Querschnittsdarstellung des Torsionsdämpfers 1 gemäß den Figuren 1 bis 3 gezeigt. Insbesondere ist hier der Sitz des Dämpferelements 5 in den Durchgangsöffnungen 7 verdeutlicht. Das Dämpferelement 5 sitzt vorzugsweise in Umfangsrichtung spielfrei mit seinen Vorsprüngen 9 in den Durchgangsöffnungen 7.

An den Anschlussstellen 29 und 31 in Richtung der jeweiligen stirnseitigen Enden 19, 21 des Torsionsdämpfers 1 kann ein gewisses axiales Spiel toleriert werden. Vorzugsweise liegt das Dämpferelement 5 aber auch an den beiden Anschlussabschnitten 29, 31 spielfrei an den Flanken der Durchgangsöffnung 7 an. Ein etwaiger axialer Spalt wird vorzugsweise infolge der Montage durch eine Qerdehnung des Materials des Dämpferelements ausgefüllt.

Insbesondere werden im installierten Zustand, nachdem also die erste Fahrzeugkomponente 101, die zweite Fahrzeugkomponente 103 und der Torsionsdämpfer 1 ineinandergesteckt wurden, durch partielle Kompression des Dämpferelements 5 alle drei Komponenten des Antriebsstrangs beziehungsweise des Lenkantriebsstrangs 100 spielarm oder bestenfalls spielfrei und sicher zueinander gehalten.

Radial innerhalb der Sicherungshülse 3 ist der Sicherungsring 25 angeordnet. Aus Figur 4 ist auch ersichtlich, dass sich der Sicherungsring 25 axial an dem Dämpferelement 5 abstützt, um axiale Bewegungen zwischen dem Dämpferelement 5 und der zweiten Fahrzeugkomponente 103, sofern gemäß Figur 1 installiert, zu minimieren. Nach Entfernen der Verbindungsstege 27 sind die beiden Sicherungselemente 3, 25 voneinander isoliert. Vorzugsweise weisen die Verbindungsstege wenigstens eine Solltrennstelle 28 auf, an der die Verbindungsstege aufgebrochen oder durchtrennt werden können.

Wie sich in Zusammenschau der Figuren des Ausführungsbeispiels ergibt, ist der konstruktive Aufbau des Torsionsdämpfers 1 sehr einfach, da er im vormontierten Zustand aus lediglich zwei separaten Bauteilen besteht. Selbst nach Trennung der Verbindungsstege 27 weist der gesamte Torsionsdämpfer 1 lediglich nur drei Bauteile auf. Es sind insbesondere keine zusätzlichen Werkzeuge zum Fixieren des Torsionsdämpfers 1 an den Fahrzeugkomponenten 101, 103 notwendig (abgesehen von den Befestigungsmitteln zur Fixierung der Sicherungshülse 3 an der ersten Fahrzeugkomponente 101).

### Bezugszeichenliste

- 1: Torsionsdämpfer
- 3: Sicherungshülse
- 5: Dämpfungselement
- 7: Durchgangsöffnungen
- 9, 15, 21, 23: Vorsprünge
- 11, 17: Vertiefungen
- 19: erstes stirnseitiges Ende
- 21: zweites stirnseitiges Ende
- 25: Sicherungsring
- 27: Verbindungsstege
- 28: Solltrennstelle
- 29,31: Anschlussstellen

- 100: System, insbesondere Antriebsstrang oder Lenkantriebsstrang
- 101: erste Fahrzeugkomponente
- 103: zweite Fahrzeugkomponente
- 104: weibliches Kupplungsprofil
- 105, 109: Ausnehmungen
- 106: männliches Kupplungsprofil
- 107, 111: Vorsprünge

- L: Längsachse

## Patentansprüche

1. Torsionsdämpfer (1) für ein Fahrzeug, insbesondere Lenkungsdämpfer oder Dämpfer für einen Antriebsstrang des Fahrzeugs, der zur Drehmomentübertragung zwischen einer ersten Fahrzeugkomponente (101) und einer zweiten Fahrzeugkomponente (103) eingerichtet ist, und wobei der Torsionsdämpfer (1) ein elastisch verformbares Dämpferelement (5) aufweist, welches dazu eingerichtet ist, in installiertem Zustand des Torsionsdämpfers (1) zwischen der ersten und zweiten Fahrzeugkomponente (101, 103) zu sitzen und die erste Fahrzeugkomponente (101) mit der zweiten Fahrzeugkomponente (103) drehmomentübertragend zu koppeln,
**dadurch gekennzeichnet, dass** der Torsionsdämpfer (1) eine Sicherungshülse (3) aufweist, die dazu eingerichtet ist, an der ersten Fahrzeugkomponente (101) axial und rotatorisch fixiert zu werden und im installierten Zustand von der zweiten Fahrzeugkomponente (103) beabstandet angeordnet zu sein, und
eine Anzahl radialer Durchgangsöffnungen (7) aufweist, die derart dimensioniert sind, dass das Dämpferelement (5) im installierten Zustand die Durchgangsöffnungen (7) durchdringt.

2. Torsionsdämpfer (1) nach Anspruch 1,
wobei die Sicherungshülse (3) teilweise oder vollständig aus einer Hartkomponente ausgebildet ist, und das Dämpferelement (5) teilweise oder vollständig aus einer Weichkomponente hergestellt ist.

3. Torsionsdämpfer (1) nach Anspruch 1 oder 2,
wobei das Dämpferelement (5) derart dimensioniert ist, dass das Dämpferelement (5) im installierten Zustand mittels formschlüssigen Anliegens an den Durchgangsöffnungen (7) axial und rotatorisch an der Sicherungshülse (3) fixiert ist.

4. Torsionsdämpfer (1) nach Anspruch 3,
wobei das Dämpferelement (5) aus einem volumenkompressiblen Material hergestellt ist, und derart dimensioniert, dass es im installierten Zustand mittels der beiden Fahrzeugkomponenten zumindest partiell komprimiert ist.

5. Torsionsdämpfer (1) nach Anspruch 4, wobei das volumenkompressible Material als Elastomer auf der Basis von zelligen, insbesondere mikrozelligen, Polyisocyanat-Polyadditionsprodukten, insbesondere auf der Basis von mikrozelligen Polyurethanelastomeren und/oder thermoplastischem Polyurethan, vorzugsweise enthaltend Polyharnstoffstrukturen ausgebildet ist.

6. Torsionsdämpfer (1) nach einem der vorstehenden Ansprüche,
wobei die Sicherungshülse (3) ein erstes Sicherungselement ist, und der Torsionsdämpfer (1) ein zweites Sicherungselement (25) aufweist, das dazu eingerichtet ist, an der zweiten Fahrzeugkomponente (103) axial und rotatorisch fixiert zu werden und im installierten Zustand von der ersten Fahrzeugkomponente (101) beabstandet angeordnet zu sein.

7. Torsionsdämpfer (1) nach Anspruch 6,
wobei das zweite Sicherungselement (25) als Sicherungsring ausgebildet und axial angrenzend an dem Dämpferelement (5) angeordnet ist.

8. Torsionsdämpfer (1) nach einem der Ansprüche 6 oder 7,
wobei das erste Sicherungselement (3) an einem ersten stirnseitigen Ende (19) des Torsionsdämpfers (1) mit der ersten Fahrzeugkomponente (101), insbesondere kraft- oder formschlüssig, verbindbar ist, und das zweite Sicherungselement (25) an einem gegenüberliegenden zweiten stirnseitigen Ende (21) des Torsionsdämpfers (1) mit der zweiten Fahrzeugkomponente (103), insbesondere kraft- oder formschlüssig, verbindbar ist.

9. Torsionsdämpfer (1) nach einem der Ansprüche 6 bis 8,
wobei das erste und zweite Sicherungselement (3, 25) in einem vormontierten Zustand des Torsionsdämpfers (1) mittels eines oder mehrerer Verbindungsstege (27) verbunden sind, wobei vorzugsweise die Verbindungsstege (27) jeweils eine Solltrennstelle (28) zur Trennung der Sicherungselemente (3, 25) voneinander aufweisen.

10. Torsionsdämpfer (1) nach einem der vorstehenden Ansprüche,
wobei das Dämpferelement (5) quer zu seiner Längsachse (L) einen im wesentlichen sternförmigen Querschnitt aufweist, der eine mit jeweils an den Fahrzeugkomponenten (101, 103) ausgebildeten Kupplungsprofilen (104, 106) korrespondierende Anzahl von Vertiefungen (17) und Vorsprüngen (15) in radialer Richtung aufweist, welche dazu eingerichtet sind, im installierten Zustand des Torsionsdämpfers (1) zwischen den Kupplungsprofilen (104, 106) der ersten und zweiten Fahrzeugkomponente (101, 103) zu sitzen.

11. Torsionsdämpfer (1) nach einem der vorstehenden Ansprüche,
wobei die Sicherungshülse (3) eine Außenhülse ist, die das Dämpferelement (5) im Wesentlichen umschließt, und zur Installation an einer Fahrzeugkomponente mit weiblichem Kupplungsprofil eingerichtet ist.

12. Antriebsstrang (100) eines Fahrzeugs, mit
einer Antriebswelle zur Drehmomentübertragung von einem Antriebsaggregat zu wenigstens einem Rad, wobei
die Antriebswelle eine erste Fahrzeugkomponente (101) und eine zweite Fahrzeugkomponente (103) aufweist,
die erste Fahrzeugkomponente (101) und die zweite Fahrzeugkomponente (103) miteinander mittels eines Torsionsdämpfers (1) drehmomentübertragend gekoppelt sind, **dadurch gekennzeichnet, dass** der Torsionsdämpfer (1) ein elastisch verformbares Dämpferelement (5), welches zwischen der ersten und zweiten Fahrzeugkomponente (101, 103) sitzt und
eine Sicherungshülse (3) aufweist, die an der ersten Fahrzeugkomponente (101) axial und rotatorisch fixiert und von der zweiten Fahrzeugkomponente beabstandet angeordnet ist, und
eine Anzahl radialer Durchgangsöffnungen (7) aufweist, welche das Dämpferelement (5) durchdringt.

13. Antriebsstrang nach Anspruch 12,
wobei der Torsionsdämpfer (1) nach einem der Ansprüche 2 bis 11 ausgebildet ist.

14. Antriebsstrang (100) eines Fahrzeugs, mit
einer Lenkwelle zur Drehmomentübertragung von einem Lenkmechanismus zu einem Rad Lenkrad, wobei
die Lenkwelle eine erste Fahrzeugkomponente (101) und eine zweite Fahrzeugkomponente (103) aufweist, die erste Fahrzeugkomponente (101) und die zweite Fahrzeugkomponente (103) miteinander mittels eines Torsionsdämpfers (1) drehmomentübertragend gekoppelt sind,
**dadurch gekennzeichnet, dass** der Torsionsdämpfer (1) ein elastisch verformbares Dämpferelement (5), welches zwischen der ersten und zweiten Fahrzeugkomponente (101, 103) sitzt und
eine Sicherungshülse (3) aufweist, die an der ersten Fahrzeugkomponente (101) axial und rotatorisch fixiert und von der zweiten Fahrzeugkomponente (103) beabstandet angeordnet ist, und
eine Anzahl radialer Durchgangsöffnungen (7) aufweist, welche das Dämpferelement (5) durchdringt.

15. Antriebsstrang (100) nach Anspruch 14,
wobei der Torsionsdämpfer (1) nach einem der Ansprüche 2 bis 11 ausgebildet ist.

## Claims

1. A torsion damper (1) for a vehicle, in particular steering damper or damper for a drive train of the vehicle, which is configured to transmit torque between a first vehicle component (101) and a second vehicle component (103), and wherein the torsion damper (1) comprises a resiliently deformable damper element (5) configured to sit between the first and the second vehicle component (101, 103) in the installed state of the torsion damper (1) and to couple the first vehicle component (101) to the second vehicle component (103) in a torque-transmitting manner,
**characterized in that** the torsion damper (1) comprises a securing sleeve (3), which is configured to be axially and rotationally fixed to the first vehicle component (101) and to be arranged spaced apart from the second vehicle component (103) in the installed state, and comprises a number of radial through-openings (7), which are dimensioned in such a way that the damper element (5) penetrates the through-openings (7) in the installed state.

2. The torsion damper (1) according to claim 1, wherein the securing sleeve (3) is formed partially or completely from a hard component, and the damper element (5) is produced partially or completely from a soft component.

3. The torsion damper (1) according to claim 1 or 2, wherein the damper element (5) is dimensioned in such a way that the damper element (5) in the installed state is axially and rotationally fixed to the securing sleeve (3) by means of bearing against the through-openings (7) in a form-fitting manner.

4. The torsion damper (1) according to claim 3, wherein the damper element (5) is produced from a volume-compressible material and is dimensioned in such a way that it is at least partially compressed by means of the two vehicle components in the installed state.

5. The torsion damper (1) according to claim 4, wherein the volume-compressible material is in the form of an elastomer based on cellular, in particular microcellular, polyisocyanate polyaddition products, in particular based on microcellular polyurethane elastomers and/or thermoplastic polyurethane, preferably containing polyurea structures.

6. The torsion damper (1) according to one of the preceding claims,
wherein the securing sleeve (3) is a first securing element, and the torsion damper (1) comprises a second securing element (25), which is configured to be axially and rotationally fixed to the second vehicle component (103) and to be arranged spaced apart from the first vehicle component (101) in the installed state.

7. The torsion damper (1) according to claim 6, wherein the second securing element (25) is in the form of a securing ring and axially adjoins the damper element (5) .

8. The torsion damper (1) according to either of claims 6 and 7,
wherein the first securing element (3) can be connected to the first vehicle component (101), in particular by a force fit or form fit, at a first face end (19) of the torsion damper (1), and the second securing element (25) can be connected to the second vehicle component (103), in particular by a force fit or form fit, at an opposite second face end (21) of the torsion damper (1).

9. The torsion damper (1) according to one of claims 6 to 8,
wherein the first and the second securing element (3, 25) are connected by means of one or more connecting webs (27) in a pre-mounted state of the torsion damper (1), wherein preferably the connecting webs (27) each have an intended separation point (28) for separating the securing elements (3, 25) from one another.

10. The torsion damper (1) according to one of the preceding claims,
wherein the damper element (5) transversely to its longitudinal axis (L) has a substantially star-shaped cross section which has a number of recesses (17) and projections (15) in the radial direction that corresponds to coupling profiles (104, 106) respectively formed on the vehicle components (101, 103), which recesses and projections are configured to sit between the coupling profiles (104, 106) of the first and the second vehicle component (101, 103) in the installed state of the torsion damper (1).

11. The torsion damper (1) according to one of the preceding claims,
wherein the securing sleeve (3) is an outer sleeve, which substantially encloses the damper element (5), and is configured for installation on a vehicle component with a female coupling profile.

12. A drive train (100) of a vehicle, having a drive shaft for transmitting torque from a drive unit to at least one wheel, wherein
the drive shaft comprises a first vehicle component (101) and a second vehicle component (103),
the first vehicle component (101) and the second vehicle component (103) are coupled to one another in a torque-transmitting manner by means of a torsion damper (1), **characterized in that** the torsion damper (1) comprises a resiliently deformable damper element (5), which sits between the first and the second vehicle component (101, 103), and
comprises a securing sleeve (3), which is axially and rotationally fixed to the first vehicle component (101) and is arranged spaced apart from the second vehicle component, and
comprises a number of radial through-openings (7), which the damper element (5) penetrates.

13. The drive train according to claim 12,
wherein the torsion damper (1) is formed according to one of claims 2 to 11.

14. A drive train (100) of a vehicle, having a steering shaft for transmitting torque from a steering mechanism to a steering wheel, wherein
the steering shaft comprises a first vehicle component (101) and a second vehicle component (103), the first vehicle component (101) and the second vehicle component (103) are coupled to one another in a torque-transmitting manner by means of a torsion damper (1),
**characterized in that** the torsion damper (1) comprises a resiliently deformable damper element (5), which sits between the first and the second vehicle component (101, 103), and
comprises a securing sleeve (3), which is axially and rotationally fixed to the first vehicle component (101) and is arranged spaced apart from the second vehicle component (103), and
comprises a number of radial through-openings (7), which the damper element (5) penetrates.

15. The drive train (100) according to claim 14, wherein the torsion damper (1) is formed according to one of claims 2 to 11.

## Revendications

1. Amortisseur de torsion (1) destiné à un véhicule, notamment amortisseur de direction ou amortisseur destiné à une chaîne cinématique du véhicule qui est conçue pour transmettre un couple entre un premier composant de véhicule (101) et un deuxième composant de véhicule (103), et l'amortisseur de torsion (1) comportant un élément amortisseur (5) déformable élastiquement qui est conçu pour siéger entre les premier et deuxième composants de véhicule (101, 103) lorsque l'amortisseur de torsion (1) est installé et pour accoupler en transmission de couple le premier composant de véhicule (101) au deuxième composant de véhicule (103),
**caractérisé en ce que** l'amortisseur de torsion (1) comporte un manchon de sécurité (3) qui est conçu pour être fixé axialement et en rotation au premier composant de véhicule (101) et, à l'état installé, pour être disposé à distance du deuxième composant de véhicule (103), et comporte un certain nombre d'ouvertures de passage radiales (7) qui sont dimensionnées de manière à ce que l'élément amortisseur (5) pénètre dans les ouvertures de passage (7) en l'état installé.

2. Amortisseur de torsion (1) selon la revendication 1,
le manchon de sécurité (3) étant formé partiellement ou entièrement à partir d'un composant dur, et l'élément amortisseur (5) étant réalisé partiellement ou entièrement à partir d'un composant souple.

3. Amortisseur de torsion (1) selon la revendication 1 ou 2,
l'élément amortisseur (5) étant dimensionné de manière à ce que, à l'état installé, l'élément amortisseur (5) est fixé axialement et en rotation au manchon de sécurité (3) par appui par complémentarité de formes sur les ouvertures de passage (7).

4. Amortisseur de torsion (1) selon la revendication 3,
l'élément amortisseur (5) étant réalisé à partir d'un matériau compressible en volume et étant dimensionné de manière à être au moins partiellement comprimé à l'état installé au moyen des deux composants du véhicule.

5. Amortisseur de torsion (1) selon la revendication 4,
le matériau compressible en volume étant un élastomère à base de produits de polyaddition de polyisocyanates cellulaires, en particulier micro-cellulaires, en particulier à base d'élastomères de polyuréthane micro-cellulaires et/ou de polyuréthane thermoplastique, contenant de préférence des structures de polycarbamide.

6. Amortisseur de torsion (1) selon l'une des revendications précédentes,
le manchon de sécurité (3) est un premier élément de sécurité, et l'amortisseur de torsion (1) comportant un deuxième élément de sécurité (25) qui est conçu pour être fixé axialement et en rotation au deuxième composant de véhicule (103) et, à l'état installé, pour être disposé à distance du premier composant de véhicule (101).

7. Amortisseur de torsion (1) selon la revendication 6,
le deuxième élément de sécurité (25) étant conçu comme une bague de sécurité et étant disposé de manière axialement adjacente à l'élément amortisseur (5).

8. Amortisseur de torsion (1) selon l'une des revendications 6 ou 7, le premier élément de sécurité (3) pouvant être relié au premier composant de véhicule (101) à une première extrémité frontale (19) de l'amortisseur de torsion (1), en particulier par une liaison en force ou à complémentarité de formes, et le deuxième élément de sécurité (25) pouvant être relié au deuxième composant de véhicule (103) à une deuxième extrémité frontale opposée (21) de l'amortisseur de torsion (1), en particulier par une liaison en force ou à complémentarité de formes.

9. Amortisseur de torsion (1) selon l'une des revendications 6 à 8,
le premier et le deuxième élément de sécurité (3, 25) étant reliés au moyen d'une ou plusieurs nervures de liaison (27) lorsque l'amortisseur de torsion (1) est dans un état pré-monté, les nervures de liaison (27) comportant chacune de préférence un point de séparation cible (28) destiné à la séparation des éléments de sécurité (3, 25) les uns par rapport aux autres.

10. Amortisseur de torsion (1) selon l'une des revendications précédentes.
l'élément amortisseur (5) ayant transversalement à son axe longitudinal (L) une section transversale sensiblement en forme d'étoile qui comporte dans la direction radiale un certain nombre de dépressions (17) et de saillies (15) qui correspondent à des profilés d'accouplement (104, 106) formés au niveau des composants de véhicule (101, 103) et qui sont conçues pour siéger, lorsque l'amortisseur de torsion (1) est installé, entre les profilés d'accouplement (104, 106) des premier et deuxième composants de véhicule (101, 103) .

11. Amortisseur de torsion (1) selon l'une des revendications précédentes,
le manchon de sécurité (3) étant un manchon extérieur qui enferme sensiblement l'élément amortisseur (5) et qui est conçu pour être installé sur un composant de véhicule ayant un profil d'accouplement femelle.

12. Chaîne cinématique (100) d'un véhicule, ladite chaîne cinématique comprenant
un arbre d'entraînement destiné à transmettre un couple d'une unité d'entraînement à au moins une roue,
l'arbre d'entraînement comportant un premier composant de véhicule (101) et un deuxième composant de véhicule (103),
le premier composant de véhicule (101) et le deuxième composant de véhicule (103) étant accouplés l'un à l'autre en transmission de couple au moyen d'un amortisseur de torsion (1),
**caractérisée en ce que** l'amortisseur de torsion (1) comporte
un élément amortisseur (5) déformable élastiquement qui siège entre les premier et deuxième composants de véhicule (101, 103) et
un manchon de sécurité (3) qui est fixé axialement et en rotation au premier composant de véhicule (101) et
qui est disposé à distance du deuxième composant de véhicule, et
un certain nombre d'ouvertures de passage radiales (7) que traverse l'élément amortisseur (5).

13. Chaîne cinématique selon la revendication 12, l'amortisseur de torsion (1) étant conçu selon l'une des revendications 2 à 11.

14. Chaîne cinématique (100) d'un véhicule, ladite chaîne cinématique comprenant
un arbre de direction destiné à transmettre un couple d'un mécanisme de direction à un volant,
l'arbre de direction comportant un premier composant de véhicule (101) et un deuxième composant de véhicule (103), le premier composant de véhicule (101) et le deuxième composant de véhicule (103) étant accouplés l'un à l'autre en transmission de couple au moyen d'un amortisseur de torsion (1),
**caractérisée en ce que** l'amortisseur de torsion (1) comporte
un élément amortisseur (5) déformable élastiquement qui siège entre les premier et deuxième composants de véhicule (101, 103) et
un manchon de sécurité (3) qui est fixé axialement et en rotation au premier composant de véhicule (101) et disposé à distance du deuxième composant de véhicule (103), et
un certain nombre d'ouvertures de passage radiales (7) que traverse l'élément amortisseur (5).

15. Chaîne cinématique (100) selon la revendication 14,
l'amortisseur de torsion (1) étant conçu selon l'une des revendications 2 à 11.
